# NEUE EUROPÄISCHE PATENTSCHRIFT

(11) **EP 2 837 985 B2**
(45) Veröffentlichungstag und Bekanntmachung des Hinweises auf die Entscheidung über den Einspruch: **02.12.2020**
(45) Hinweis auf die Patenterteilung: 20.09.2017
(21) Anmeldenummer: 14170119.3
(22) Anmeldetag: 27.05.2014
(51) Int. Cl.: G05D 1/02

(54) **Fahrerloses Transportfahrzeug und Verfahren zum Betreiben eines fahrerlosen Transportfahrzeugs**
Autonomous transport vehicle and method for operating an autonomous transport vehicle
Véhicule de transport autonome et procédé de fonctionnement d'un véhicule de transport autonome

(30) Priorität: 18.06.2013 DE 102013211414
(43) Veröffentlichungstag der Anmeldung: 18.02.2015
(73) Patentinhaber: KUKA Deutschland GmbH, 86165 Augsburg (DE)
(72) Erfinder: Pfaff, Patrick, 86163 Augsburg (DE); Klein, Björn, 86316 Friedberg (DE); Bick, Christoph, 86199 Augsburg (DE)
(74) Vertreter: Böss, Dieter Alexander

(56) Entgegenhaltungen:
- WO-A1-2012/140188
- WO-A2-2007/047510
- KR-B1- 100 645 816
- TW-A- 201 323 300
- US-A- 6 041 274
- US-A1- 2007 103 107
- US-B1- 6 256 560
- US-B1- 6 493 614

## Beschreibung

Die Erfindung betrifft ein fahrerloses Transportfahrzeug und ein Verfahren zum Betreiben eines fahrerlosen Transportfahrzeugs

Unter einem fahrerlosen Transportfahrzeug versteht man ein automatisch gesteuertes flurgebundenes Fahrzeug mit einem eigenen Antrieb. Fahrerlose Transportfahrzeuge, die im Englischen als automatic guided vehicle (AGV) bezeichnet werden, sind z.B. mobile Roboter. Fahrerlose Transportfahrzeuge sind insbesondere eingerichtet, automatisch einen Zielpunkt anzufahren, um dort anzuhalten.

Die US 6,256,560 B1 offenbart ein Verfahren zum Betreiben eines fahrerlosen Transportfahrzeugs, das automatisch von einem Startpunkt zu einem Zielpunkt fährt. Am Zielpunkt angekommen, tastet das fahrerlose Transportfahrzeug die Umgebung ab, um seine Ist-Position zu bestimmen. Anschließend steuert eine Steuervorrichtung des fahrlosen Transportfahrzeuge die Räder des fahrerlosen Transportfahrzeugs an, damit das fahrerlose Transportfahrzeug seine Soll-Position einnimmt.

Die US 6,493,614 B1 offenbart ein Verfahren zum Betreiben eines fahrerlosen Transportfahrzeugs, das automatisch von einem Startpunkt zu einem Zielpunkt entlang einer Leitlinie fährt. Während des Fahrens überprüft das fahrerlose Transportfahrzeug seine Ist-Position mit einer Soll-Position und korrigiert gegebenenfalls seine Fahrt. Am Zielpunkt angekommen, erkennt das fahrerlose Transportfahrzeug einen Stoppmarker und stoppt automatisch.

Die US 6,041,274 offenbart ein automatisches Bewegen eines mit einem Roboterarm versehenen fahrerlosen Fahrzeugs zu einem Zielpunkt basierend auf vorab geteachten Koordinaten des Zielpunkts. Am Zielpunkt angekommen, soll der Roboterarm eine festgelegte, geteachte Aufgabe durchführen. Dazu erfasst das Fahrzeug am Zielpunkt seine Ist-Position durch ein optisches Erfassen von auf dem Boden angebrachter Marker, um den Unterschied zwischen der Soll-Position und der Ist-Position des Fahrzeugs am Zielpunkt zu messen. Aufgrund des erkannten Unterschieds wird die Soll-Bewegung des Roboterarms für das Ausführen der festgelegten Aufgabe modifiziert.

Die TW 201323300 A1 offenbart ein System zum Betreiben von fahrerlosen Transportfahrzeugen. Die fahrerlosen Transportfahrzeuge fahren automatisch entlang einer Leitlinie. Sollte eines der fahrerlosen Transportfahrzeuge die Leitlinie verlassen, dann fährt es automatisch aufgrund optischer Auswertungen der Umgebung weiter.

Die US 2007/0103107 A1 offenbart ein sich bewegendes Objekt, z.B. einen Kran oder eine Roboterhand, vor seiner gewollten Zielposition aufgrund des noch verbleibenden Abstands zur Zielposition abzubremsen.

Die Aufgabe der Erfindung ist es, ein Verfahren zum Betreiben eines fahrerlosen Transportfahrzeugs anzugeben, welches es erlaubt, dass das fahrerlose Transportfahrzeug am Zielpunkt verbessert seine Soll-Position bzw. Soll-Lage einnimmt. Eine weitere Aufgabe der Erfindung ist es, ein entsprechendes fahrerloses Transportfahrzeug anzugeben.

Die Aufgabe der Erfindung wird gelöst durch ein Verfahren zum Betreiben eines fahrerlosen Transportfahrzeugs, aufweisend die Merkmale des Patentanspruchs 1.

Ein weiterer Aspekt der Erfindung betrifft ein fahrerloses Transportfahrzeug, aufweisend einen Fahrzeuggrundkörper, mehrere, drehbar relativ zum Fahrzeuggrundkörper gelagerte Räder zum Bewegen des fahrerlosen Transportfahrzeugs, wenigstens einen mit wenigstens einem der Räder gekoppelten Antrieb zum Antreiben des entsprechenden Rades, einen Speicher, in dem Signale oder Daten gespeichert sind, welche einer Soll-Position oder Soll-Lage des fahrerlosen Transportfahrzeugs an einem Zielpunkt zugeordnet sind, sowie wenigstens einen Sensor, der eingerichtet ist, die Umgebung am Zielpunkt zu erfassen, um Signale oder Daten zu erhalten, welche der Ist-Position oder Ist-Lage des fahrerlosen Transportfahrzeugs zugeordnet sind, und eine mit dem wenigstens einen Antrieb, dem Speicher und dem wenigstens einen Sensor gekoppelte Steuervorrichtung, welche eingerichtet ist, das wenigstens eine Rad derart anzusteuern, sodass das fahrerlose Transportfahrzeug das erfindungsgemäße Verfahren durchführt.

Das erfindungsgemäße fahrerlose Transportfahrzeug ist vorzugsweise ein omnidirektionales fahrerloses Transportfahrzeug, welches sich im Wesentlichen in alle Richtungen auf der Fahrebene bewegen lässt. Das Rad bzw. die Räder des erfindungsgemäßen fahrerlosen Transportfahrzeugs ist demnach vorzugsweise ein omnidirektionales Rad bzw. sind demnach omnidirektionale Räder. Omnidirektionale Räder werden auch als Mecanum-Räder bezeichnet. Solche Räder umfassen beispielsweise eine drehbar gelagerte Felge, an der mehrere Rollkörper antriebslos gelagert sind. Die Felge kann mit einem Antrieb angetrieben werden.

Nach einer Variante des erfindungsgemäßen fahrerlosen Trägerfahrzeugs weist dieses wenigstens einen Roboterarm auf, der mehrere, hintereinander angeordnete, über Gelenke verbundene Glieder aufweist. Der Roboterarm wird vorzugsweise mittels der Steuervorrichtung des fahrerlosen Transportfahrzeugs bewegt.

Gemäß dem erfindungsgemäßen Verfahren bewegt sich das fahrerlose Transportfahrzeug automatisch vom Startpunkt zum Zielpunkt. Dies erfolgt vorzugsweise mittels der Steuervorrichtung, die die Räder des fahrerlosen Transportfahrzeugs entsprechend ansteuern. Das automatische Bewegen des fahrerlosen Transportfahrzeugs vom Startpunkt zum Zielpunkt erfolgt beispielsweise mittels einer Pfadplanung. Pfadplanung als solche ist dem Fachmann im Prinzip bekannt. Diese wird vor dem Starten des fahrerlosen Transportfahrzeugs durchgeführt, z. B. mittels der Steuervorrichtung des fahrerlosen Transportfahrzeugs oder mittels einer zentralen Steuervorrichtung. Eine zentral durchgeführte Pfadplanung kann dann vorteilhaft sein, wenn mehrere fahrerlose Transportfahrzeuge verwendet werden. Die Pfadplanung basiert auf einer digitalen Landkarte der Strecke zwischen dem Startpunkt und dem Zielpunkt, die beispielsweise im Speicher gespeichert ist. Die digitale Landkarte wird gemäß folgender Verfahrensschritte vor dem Schritt a) erstellt:
- manuelles Bewegen des fahrerlosen Transportfahrzeugs vom Startpunkt zum Zielpunkt,
- während des manuellen Bewegens des fahrerlosen Transportfahrzeugs, Erfassen der Umgebung mittels des wenigstens einen Sensors des fahrerlosen Transportfahrzeugs, um die digitale Landkarte der Strecke zwischen dem Startpunkt und dem Zielpunkt zu erhalten, und
- Speichern der digitalen Landkarte insbesondere in einem mit der Steuervorrichtung des fahrerlosen Transportfahrzeugs gekoppelten Speicher.

Während des Erfassens der Umgebung mittels des wenigstens einen Sensors kann das fahrerlose Transportfahrzeug auch angehalten werden.

Am Zielpunkt angekommen, nimmt das fahrerlose Transportfahrzeug in der Regel nicht die gewünschte Soll-Position bzw. Soll-Lage (Soll-Position plus Soll-Orientierung) ein. Damit das fahrerlose Trägerfahrzeug verbessert die Soll-Position bzw. Soll-Lage am Zielpunkt einnehmen kann, wird, nachdem das fahrerlose Transportfahrzeug den Zielpunkt erreicht und angehalten hat, automatisch die Umgebung am Zielpunkt mit dem wenigstens einen Sensor erfasst. Unter "erfassen" soll insbesondere ein Abtasten der Umgebung oder ein Aufnehmen von Bildern der Umgebung des Zielpunktes verstanden werden. Insbesondere mittels der Steuervorrichtung können die von dem wenigstens einen Sensor stammenden Signale oder Daten z.B. mittels Bilddatenverarbeitung verarbeitet bzw. ausgewertet werden.

Der wenigstens eine Sensor umfasst beispielsweise wenigstens einen Laserscanner und/oder wenigstens eine Kamera. Der wenigstens eine Sensor umfasst z.B. einen 2D Laserscanner, einen 3D Laserscanner, eine RGBD Kamera und/oder eine TOF Kamera. TOF-Kameras sind 3D-Kamerasysteme, die mit dem Laufzeitverfahren Distanzen messen.

Anschließend werden, insbesondere mittels der Steuervorrichtung des fahrerlosen Transportfahrzeugs, die der mittels des wenigstens einen Sensors erfassten Umgebung zugeordneten Signale oder Daten mit Signalen oder Daten verglichen, welche der Soll-Position oder Soll-Lage des fahrerlosen Transportfahrzeugs am Zielpunkt zugeordnet sind. Das Vergleichen der Signale bzw. Daten kann z.B. durch ein gridbasiertes, korrelatives Scanmatching oder durch ein normalenbasiertes Scanmatching erfolgen, wenn zeidimensionale Bilddaten vorliegen. Im dreidimensionalen Fall kann das Vergleichen der Signale bzw. Daten durch einen sogenanntes ICP (Iterative Closest Point) Algorithmus oder durch ein sogenanntes Feature-Matching erfolgen.

Dadurch ist es z.B. möglich, eine Fehlposition bzw. Fehllage des fahrerlosen Transportfahrzeugs am Zielpunkt zu erkennen und aufgrund dieses Fehlers die Antriebe der Räder derart anzusteuern, sodass sich dieser Fehler zumindest verringert.

Erfindungsgemäß wird anschließend das fahrerlose Transportfahrzeug, insbesondere gesteuert durch seine Steuervorrichtung, aufgrund des Vergleiches der Signale oder Daten derart bewegt, sodass die Ist-Position oder Ist-Lage gleich der Soll-Position bzw. Soll-Lage zumindest innerhalb einer vorgegeben Toleranz ist. Dies erfolgt mittels der Positions- oder Lageregelung.

Die Führungsgröße der Positionsregelung bzw. der Lageregelung ist der Soll-Position bzw. der Soll-Lage des fahrerlosen Transportfahrzeugs und die Regelgröße der Positions-Regelung bzw. der Lageregelung ist der Ist-Position bzw. der Ist-Lage des fahrerlosen Transportfahrzeugs am Zielpunkt zugeordnet.

Damit die Ist-Position bzw. Ist-Lage des fahrerlosen Transportfahrzeugs am Zielpunkt innerhalb der vorgegeben Toleranz liegt, können die Schritte b) bis d) entsprechend oft wiederholt werden.

Um die der Soll-Position bzw. Soll-Lage am Zielpunkt zugeordneten Signale bzw. Daten zu erhalten, kann es gemäß einer Ausführungsform des erfindungsgemäßen Verfahrens vorgesehen sein, zusätzlich vor dem Schritt a) folgende Verfahrensschritte durchzuführen:
- manuelles Bewegen des fahrerlosen Transportfahrzeugs an den Zielpunkt und Ausrichten des fahrerlosen Transportfahrzeugs, sodass es die Soll-Lage einnimmt,
- Erfassen der Umgebung am Zielpunkt mit dem wenigstens einem Sensor des fahrerlosen Transportfahrzeugs, um die Signale oder Daten zu erhalten, welche der Soll-Position oder Soll-Lage des fahrerlosen Transportfahrzeugs am Zielpunkt zugeordnet sind, und
- Speichern der Signale oder Daten, welche der Soll-Position oder Soll-Lage des fahrerlosen Transportfahrzeugs zugeordnet sind, insbesondere in einen mit der Steuervorrichtung gekoppelten Speicher des fahrerlosen Transportfahrzeugs.

Aufgrund des erfindungsgemäßen Verfahrens ist es insbesondere möglich, das Positionieren von fahrerlosen Transportfahrzeugen an ihren Zielpunkten einzig durch die Daten zu realisieren, die durch bereits vorhandene Sensoren zur Navigation und Kollisionsvermeidung zur Verfügung stehen. Dazu zählen u.a. 2D-Laserscanner, die z.B. zur Lokalisierung der fahrerlosen Transportfahrzeugen verwendet werden, oder 3D-Sensoren, die beispielsweise zur Fahrzeugabsicherung oder Kollisionsvermeidung verwendet werden. Dadurch kann der Aufwand für die Sensorik verringert werden.

Je nach Ausführungsform des erfindungsgemäßen Verfahrens kann zunächst eine Position oder Lage beispielsweise geteacht werden, die das fahrerlose Transportfahrzeug danach wiederholt mit einer relativ hohen Genauigkeit anfahren soll. Dazu wird das fahrerlose Transportfahrzeug an diese Position (Zielpunkt) gebracht, um dann vorzugsweise alle verfügbaren Sensordaten an dieser Stelle aufzuzeichnen. Bei diesen Sensordaten handelt es sich beispielsweise um Entfernungsmessungen, die zweidimensional oder auch dreidimensional vorliegen können.

Je nach Ausführungsform des erfindungsgemäßen Verfahrens können folgende Schritte durchgeführt werden:
1. Positionieren: Beispielswiese bei der Inbetriebnahme des fahrerlosen Transportfahrzeugs platziert eine Person das fahrerlose Transportfahrzeug an der Position im Raum, die später wiederholt präzise angefahren werden soll (Zielpunkt).
2. Einlernen: In diesem Schritt kann nun die Person z.B. durch ein spezielles Benutzer-Interface vorzugsweise sämtliche Sensordaten und Positionsinformationen, die dem fahrerlosen Transportfahrzeug zur Verfügung stehen, aufzeichnen (lernen). Diese Daten können aktuelle Messungen des wenigstens einen Sensors, eine lokalisierte Position in der Umgebungskarte bzw. digitalen Landkarte, Daten von Sensoren, wie z.B. Kameras, umfassen.
3. Anfahren: Das fahrerlose Transportfahrzeug fährt die gelernte Position, d.h. den Zielpunkt, autonom mit z.B. dem Pfadplaner an.
4. Referenzmessung: Nachdem das fahrerlose Transportfahrzeug angehalten hat, werden die Signale bzw. Daten, die zuvor im Einlernschritt zu dieser Position gespeichert wurden, mit den Signalen bzw. Daten, die aktuell von den Sensoren zur Verfügung gestellt werden, verglichen. Daraus kann z.B. durch geometrische bzw. mathematische Berechnung ein Offset bzw. Fehler berechnet werden.
5. Fehlerkorrektur: Nun gleicht das fahrerlose Transportfahrzeug automatisch den gemessenen Fehler zumindest innerhalb der vorgegebenen Toleranz aus. Bei holonomen Antriebkonzepten, wie beispielsweise dem omnidirektionalen Rad, kann diese Fehlerkorrektur durch eine relativ hochgenaue Positionsregelung oder Lageregelung erreicht werden.
6. Iterationsschritt: Je nach Genauigkeitsanforderung können die Schritte 4 und 5 so lange wiederholt werden, bis sich der in Schritt 4 berechnete Fehler nicht mehr signifikant verringert oder innerhalb einer vorgegeben Toleranz liegt.

Ein Ausführungsbeispiel der Erfindung ist exemplarisch in den beigefügten schematischen Figuren dargestellt. Es zeigen:
- Fig. 1: eine Draufsicht eines fahrerlosen Transportfahrzeugs,
- Fig. 2: eine Seitenansicht des fahrerlosen Transportfahrzeugs,
- Fig. 3: eine Bewegung des fahrerlosen Transportfahrzeugs der Figuren 1 und 2, und
- Fig. 4: ein Flussdiagramm zum Veranschaulichen des Betriebs des fahrerlosen Transportfahrzeugs der Figuren 1 und 2.

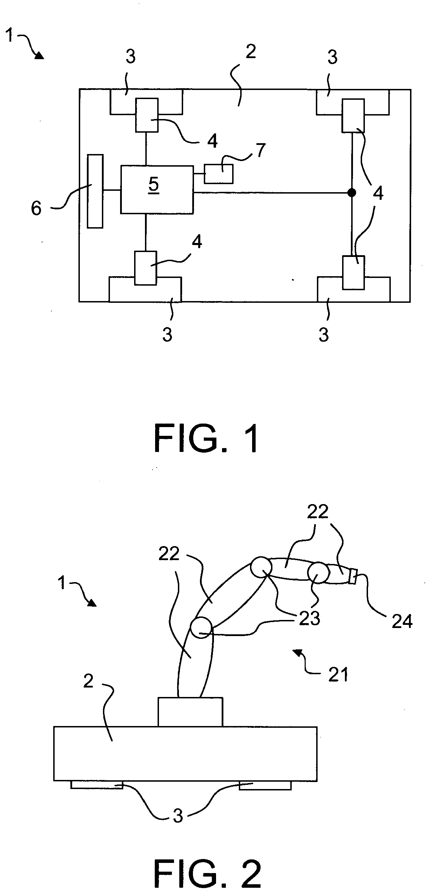

Die Fig. 1 zeigt in einer Draufsicht schematisch ein fahrerloses Transportfahrzeug 1 und die Fig. 2 zeigt eine Seitenansicht des fahrerlosen Transportfahrzeugs 1.

Das fahrerlose Transportfahrzeug 1 ist vorzugsweise derart ausgebildet, dass es sich in alle Richtungen frei bewegen lässt. Das fahrerlose Transportfahrzeug 1 ist insbesondere als ein omnidirektional bewegbares fahrerloses Transportfahrzeug 1 ausgebildet. Das fahrerlose Transportfahrzeug 1 kann ein mobiler Roboter sein, der einen Roboterarm 21 mit mehreren, hintereinander angeordneten Gliedern 22 umfasst, welche mittels Gelenke 23 verbunden sind. Der Roboterarm 21 umfasst insbesondere eine Befestigungsvorrichtung z.B. in Form eines Flansches 24, an dem ein nicht näher dargestellter Endeffektor befestigt werden kann.

Im Falle des vorliegenden Ausführungsbeispiels weist das fahrerlose Transportfahrzeug 1 einen Fahrzeuggrundkörper 2 und mehrere omnidirektionale Räder 3 auf, die auch als Mecanum-Räder bezeichnet werden. Solche Räder umfassen beispielsweise eine drehbar gelagerte Felge, an der mehrere Rollkörper antriebslos gelagert sind. Die Felge kann mit einem Antrieb angetrieben werden. Im Falle des vorliegenden Ausführungsbeispiels werden die Räder 3 mit jeweils einem elektrischen Antrieb 4 angetrieben. Diese sind vorzugsweise geregelte elektrische Antriebe.

Das fahrerlose Transportfahrzeug 1 weist ferner eine am Fahrzeuggrundkörper 2 angeordnete Steuervorrichtung 5 auf, die mit den Antrieben 4 verbunden ist. Gegebenfalls kann diese auch die Bewegung des Roboterarms 21, wenn vorhanden, ansteuern.

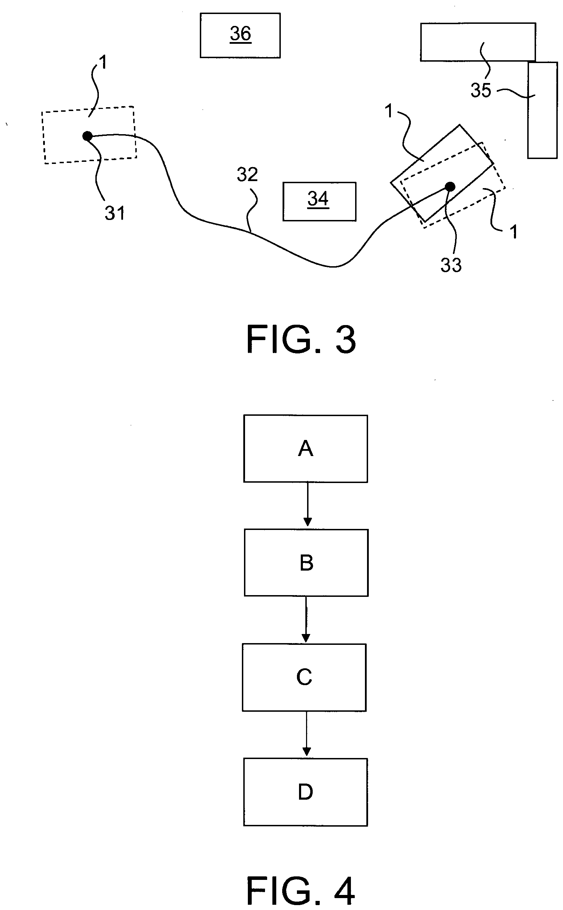

Auf der Steuervorrichtung 5 läuft ein Rechenprogramm, das die Antriebe 4 derart ansteuert, dass diese automatisch das fahrerlose Transportfahrzeug 1 von einem in der Fig. 3 gezeugten Startpunkt 31 z.B. entlang einer Strecke 32 zu einem Endpunkt 33 bewegt.

Das fahrerlose Transportfahrzeug 1 umfasst ferner wenigstens einen mit der Steuervorrichtung 5 verbundenen und z.B. am Fahrzeuggrundkörper 2 angeordneten Sensor 6. Der bzw. die Sensoren 6 umfassen z.B. wenigstens einen Laserscanner und/oder wenigstens eine Kamera und sind vorgesehen, die Umgebung 34, 35 des fahrerlosen Transportfahrzeugs 1 zu erfassen bzw. abzutasten bzw. Bilder von der Umgebung 34, 35 des fahrerlosen Transportfahrzeugs 1 zu erstellen. Die Steuervorrichtung 5 wiederum ist eingerichtet, die von den Sensoren 6 stammenden Signale oder Daten z.B. mittels Bilddatenverarbeitung zu verarbeiten bzw. auszuwerten. Der wenigstens eine Sensor 6 umfasst z.B. einen 2D Laserscanner, einen 3D Laserscanner, eine RGBD Kamera und/oder eine TOF Kamera. TOF-Kameras sind 3D-Kamerasysteme, die mit dem Laufzeitverfahren Distanzen messen.

Im Falle des vorliegenden Ausführungsbeispiels ist das fahrerlose Transportfahrzeug 1 eingerichtet, sich automatisch vom Startpunkt 31 zum Zielpunkt 33 insbesondere entlang der Strecke 32 innerhalb einer bestimmten Umgebung zu bewegen. Dazu ist in der Steuervorrichtung 5 eine digitale Landkarte derjenigen Umgebung 34, 35 gespeichert, in der sich das fahrerlose Transportfahrzeug 1 bewegen soll. Die Umgebung 34, 35 ist z.B. eine Halle. Die digitale Landkarte wurde durch ein sogenanntes SLAM Verfahren basierend auf Signalen bzw. Daten der Sensoren 6 und/oder aufgrund von nicht näher dargestellten, den Rädern 3 zugeordneten Radsensoren, erstellt. Die digitale Karte ist z.B. in einem Speicher 7 des fahrerlosen Transportfahrzeugs 1 gespeichert, der mit der Steuervorrichtung 5 gekoppelt ist. Die digitale Karte kann auch oder zusätzlich in einer zentralen Steuervorrichtung 36 gespeichert sein.

Das SLAM-Verfahren ist ein Verfahren zur simultanen Lokalisierung und Kartenerstellung (englisch: "Simultaneous Localization and Mapping"). Mittels des SLAM Verfahrens kann das fahrerlose Transportfahrzeug 1 die digitale Landkarte seiner Umgebung erstellen und gegebenenfalls seine Position, zusätzlich gegebenenfalls auch seine Orientierung, innerhalb der digitalen Landkarte schätzen.

Beispielsweise für die online Programmierung wurde das fahrerlose Transportfahrzeug 1 physikalisch entlang der zu fahrenden Strecke 32 manuell bewegt und insbesondere einzelne Positionen bzw. Lagen während der manuellen Bewegung im Speicher 7 abgespeichert. Dies erfolgt z.B. analog zum sogenannten Teachen von Industrierobotern. Das fahrerlose Transportfahrzeug 1 kann beispielsweise mittels eines Joysticks manuell bewegt werden.

Die Steuervorrichtung 5 ist für diesen Fall z.B. derart ausgeführt, dass sie aufgrund der von den Sensoren 6 stammenden Signale oder Daten die aktuelle Position erkennt, in der sich das fahrerlose Transportfahrzeug 1 befindet.

Es ist in einer anderen, nicht erfindungsgemäßen Ausführungsform aber auch möglich, dass nur die Start- und Zielpunkte 31, 33 z.B. durch Anfahren des fahrerlosen Transportfahrzeugs 1 an die entsprechenden physikalischen Start- und Zielpunkte 31, 33 "geteacht", also gespeichert werden. Die Steuervorrichtung 5 ist dann beispielsweise derart eingerichtet, automatisch die Strecke 32 vorzugsweise unter Berücksichtigung des Fahrverhaltens bzw. des Fahrvermögen des fahrerlosen Transportfahrzeugs 1 zu erstellen. In der Steuervorrichtung 5 kann dazu eine Information über das Fahrverhalten bzw. das Fahrvermögen des fahrerlosen Transportfahrzeugs 1 hinterlegt sein.

In einer anderen, nicht erfindungsgemäßen Ausführungsform wurde beispielsweise für die offline Programmierung die Strecke 32 direkt in die Steuervorrichtung 5 eingegeben. Dies kann z.B. dadurch erfolgt sein, indem die Steuervorrichtung 5 mit einem nicht näher dargestellten Touchscreen verbunden ist, auf dem die digitale Karte angezeigt wird. Daraufhin kann die Strecke durch entsprechendes Berühren des Touchscreens in die angezeigte digitale Landkarte eingezeichnet werden. Unter Berücksichtigung des Fahrverhaltens bzw. Fahrvermögens des fahrerlosen Transportfahrzeugs 1 kann die Steuervorrichtung 5 gegebenenfalls die gezeichnete Strecke 32 anpassen.

Es ist in einer anderen, nicht erfindungsgemäßen Ausführungsform auch möglich, dass nur der Startpunkt 31 und der Zielpunkt 33 eingezeichnet werden. Die Steuervorrichtung 5 ist dann beispielsweise derart eingerichtet, automatisch die Strecke 32 zu berechnen. Die Steuervorrichtung 5 ist dann beispielsweise derart eingerichtet, automatisch die Strecke 32 vorzugsweise unter Berücksichtigung des Fahrverhaltens bzw. des Fahrvermögen des fahrerlosen Transportfahrzeugs 1 zu erstellen.

Soll nun das fahrerlose Transportfahrzeug 1 die Strecke 32 abfahren, dann wird beispielsweise das fahrerlose Transportfahrzeug 1 an den Startpunkt 31 bewegt. Dies kann auch automatisch erfolgen, indem z.B. das fahrerlose Transportfahrzeug 1 mittels der Sensoren 6 seine Umgebung 34 abbildet und die Steuervorrichtung 5 beispielsweise aufgrund einer Bilddatenauswertung der von den Sensoren 6 stammenden Signale bzw. Daten den Startpunkt 31 automatisch anführt.

Anschließend fährt das fahrerlose Transportfahrzeug 1 automatisch die Strecke 32 ab basierend auf einer Lokalisierung seiner Position in der digitalen Landkarte, gegebenenfalls auch basierend auf den von den Sensoren 6 stammenden Signalen bzw. Daten, also basierend auf einer Pfadplanung. Die Pfadplanung kann auch mittels der zentralen Steuervorrichtung 36 durchgeführt werden, wobei das Ergebnis der Pfadplanung dem fahrerlosen Transportfahrzeug 1 insbesondere drahtlos übermittelt wird.

Wenn das fahrerlose Transportfahrzeug 1 am Zielpunkt 33 angekommen ist, stoppt es. In der Regel hat es jedoch noch nicht seine Soll-Position bzw. Soll-Lage exakt, zumindest innerhalb einer vorgegeben Toleranz, eingenommen. Das fahrerlose Transportfahrzeug 1 in seiner Ist-Lage nach seinem Stoppen ist in der Fig. 3 gestrichelt dargestellt.

Im Falle des vorliegenden Ausführungsbeispiels läuft auf der Steuervorrichtung 5 ein Rechenprogramm ab, das nach dem Stoppen des fahrerlosen Transportfahrzeugs 1 dieses derart automatisch bewegt, dass das fahrerlose Transportfahrzeug 1 zumindest innerhalb der vorgegeben Toleranz die Soll-Position bzw. Soll-Lage am Zielpunkt 33 einnimmt. Die erfolgt durch entsprechendes Ansteuern der Antriebe 4 der Räder 3. Die einzelnen Schritte dieser Bewegung sind mittels eines in der Fig. 4 gezeigten Flussdiagramms zusammen gefasst.

Wie bereits obenstehend beschrieben, wird zunächst das fahrerlose Transportfahrzeug 1 vom Startpunkt 31 zum Zielpunkt 33 gesteuert mittels seiner Steuervorrichtung 5 insbesondere entlang der Strecke 32 und insbesondere basierend auf der Pfadplanung automatisch bewegt, Schritt A des Flussdiagramms.

Nach dem automatisches Anhalten des fahrerlosen Transportfahrzeugs 1 am Zielpunkt 33 erfasst der wenigstens eine Sensor 6 automatische die Umgebung 35 am Zielpunkt 33, Schritt B des Flussdiagramms.

Anschließend werden mittels der Steuervorrichtung 5 des fahrerlosen Transportfahrzeugs 1 die der mittels des wenigstens einen Sensors 6 erfassten Umgebung 35 zugeordneten Signale oder Daten mit Signalen oder Daten, welche der Soll-Position oder Soll-Lage des fahrerlosen Transportfahrzeugs 1 am Zielpunk 33 zugeordnet sind, verglichen, Schritt C des Flussdiagramms.

Das Vergleichen der Signale bzw. Daten kann z.B. durch ein gridbasiertes, korrelatives Scanmatching oder durch ein normalenbasiertes Scanmatching erfolgen, wenn zeidimensionale Bilddaten vorliegen. Im dreidimensionalen Fall kann das Vergleichen der Signale bzw. Daten durch einen sogenanntes ICP (Iterative Closest Point) Algorithmus oder durch ein sogenanntes Feature-Matching erfolgen.

Die Signale bzw. Daten, die der Soll-Position bzw. Soll-Lage des fahrerlosen Transportfahrzeugs 1 am Zielpunkt 33 zugeordnet sind, sind insbesondere im Speicher 7 gespeichert. Diese Signale bzw. Daten wurden im Falle des vorliegenden Ausführungsbeispiels dadurch erhalten, dass im Rahmen der Programmierung des fahrerlosen Transportfahrzeugs 1 dieses insbesondere manuell an den Zielpunkt 33 bewegt und anschließend derart und ausgerichtet wurde, dass das fahrerlose Transportfahrzeug seine Soll-Position, vorzugsweise seine Soll-Lage einnimmt.

Anschließend wurde die Umgebung 35 am Zielpunkt 33 mittels des wenigstens einen Sensors 6 erfasst, um die Signale oder Daten zu erhalten, welche der Soll-Position oder Soll-Lage des fahrerlosen Transportfahrzeugs 1 am Zielpunkt 33 zugeordnet sind. Diese Signale bzw. Daten wurden anschließend im Speicher 7 gespeichert.

Nach dem Vergleichen der Signale bzw. Daten bzw. aufgrund dieses Vergleichens, steuert die Steuervorrichtung 5 die Antrieb 4 der Räder 3 derart automatisch an, das sich das fahrerlose Transportfahrzeug 1 automatisch derart bewegt, sodass seine Ist-Position oder Ist-Lage am Zielpunkt 33 gleich der Soll-Position bzw. Soll-Lage am Zielpunkt 33 zumindest innerhalb der vorgegebenen Toleranz ist, Schritt D des Flussdiagramms. Um dies zu erreichen, ist in der Steuervorrichtung 5 vorzugsweise eine Positionsregelung oder Lage-Regelung implementiert, deren Führungsgröße der Soll-Position bzw. der Soll-Lage des fahrerlosen Transportfahrzeugs 1 und deren Regelgröße der Ist-Position bzw. der Ist-Lage des fahrerlosen Transportfahrzeugs 1 am Zielort 33 zugeordnet ist.

Gegebenfalls ist das Rechenprogramm der Steuervorrichtung 5 derart ausgeführt, dass die Schritte B bis D solange wiederholt werden, bis die Ist-Position oder Ist-Lage gleich der Soll-Position bzw. Soll-Lage des fahrerlosen Transportfahrzeugs 1 am Zielpunkt 33 innerhalb der vorgegeben Toleranz ist.

## Patentansprüche

1. Verfahren zum Betreiben eines fahrerlosen Transportfahrzeugs (1), aufweisend folgende Verfahrensschritte:
a) automatisches Bewegen eines fahrerlosen Transportfahrzeugs (1) von einem Startpunkt (31) zu einem Zielpunkt (33) insbesondere gesteuert mittels einer Steuervorrichtung (5) des fahrerlosen Transportfahrzeugs (1),
b) nach einem automatischen Anhalten des fahrerlosen Transportfahrzeugs (1) am Zielpunkt (33), automatisches Erfassen der Umgebung (35) am Zielpunkt (33) mit wenigstens einem Sensor (6) des fahrerlosen Transportfahrzeugs (1), und
c) insbesondere mittels der Steuervorrichtung (5) des fahrerlosen Transportfahrzeugs (1), Vergleichen der mittels des wenigstens einen Sensors (6) erfassten Umgebung (35) zugeordneten Signale oder Daten mit Signalen oder Daten, welche einer Soll-Position oder Soll-Lage des fahrerlosen Transportfahrzeugs (1) am Zielpunkt (33) zugeordnet sind,
**gekennzeichnet durch**
d) automatisches Bewegen des fahrerlosen Transportfahrzeugs (1), insbesondere gesteuert durch die Steuervorrichtung (5), aufgrund des Vergleiches der der mittels des wenigstens einen Sensors (6) erfassten Umgebung (35) zugeordneten Signale oder Daten mit den Signalen oder Daten, welche die Soll-Position oder Soll-Lage des fahrerlosen Transportfahrzeugs (1) zugeordnet sind, sodass die Ist-Position oder Ist-Lage gleich der Soll-Position bzw. Soll-Lage zumindest innerhalb einer vorgegebenen Toleranz ist, mittels einer Positionsregelung oder einer Lageregelung, wobei die Führungsgröße der Positionsregelung bzw. der Lageregelung der Soll-Position bzw. der Soll-Lage des fahrerlosen Transportfahrzeugs (1) und die Regelgröße der Positionsregelung bzw. der Lageregelung der Ist-Position bzw. der Ist-Lage des fahrerlosen Transportfahrzeugs (1) am Zielpunkt (33) zugeordnet ist, und automatisches Bewegen des fahrerlosen Transportfahrzeugs (1) vom Startpunkt (31) zum Zielpunkt mittels Pfadplanung aufgrund einer digitalen Landkarte der Strecke (32) zwischen dem Startpunkt (31) und dem Zielpunkt (33), die insbesondere in einem mit der Steuervorrichtung des fahrerlosen Transportfahrzeugs (1) gekoppelten Speicher gespeichert ist, zusätzlich aufweisend vor dem Schritt a) folgende Verfahrensschritte:
- manuelles Bewegen des fahrerlosen Transportfahrzeugs (1) vom Startpunkt (31) zum Zielpunkt (33),
- während des manuellen Bewegens des fahrerlosen Transportfahrzeugs (1), Erfassen der Umgebung (34)mittels des wenigstens einen Sensors (6) des fahrerlosen Transportfahrzeugs (1), um die digitale Landkarte der Strecke (32) zwischen dem Startpunkt (31)und dem Zielpunkt (33) zu erhalten, und
- Speichern der digitalen Landkarte in einem mit der Steuervorrichtung (5) des fahrerlosen Transportfahrzeugs (1) gekoppelten Speicher (7).

2. Verfahren nach Anspruch 1, zusätzlich aufweisend Wiederholen der Schritte b) bis d) solange, bis Ist-Position oder Ist-Lage gleich der Soll-Position bzw. Soll-Lage innerhalb der vorgegeben Toleranz ist.

3. Verfahren nach Anspruch 1 oder 2, zusätzlich aufweisend vor dem Schritt a) folgende Verfahrensschritte:
- manuelles Bewegen des fahrerlosen Transportfahrzeugs (1) an den Zielpunkt (33) und Ausrichten des fahrerlosen Transportfahrzeugs (1), sodass es die Soll-Lage einnimmt,
- Erfassen der Umgebung (35) am Zielpunkt (33) mit wenigstens dem Sensor (6) des fahrerlosen Transportfahrzeugs (1), um die Signale oder Daten zu erhalten, welche der Soll-Position oder Soll-Lage des fahrerlosen Transportfahrzeugs (1) am Zielpunkt (33) zugeordnet sind, und
- Speichern der Signale oder Daten, welche der Soll-Position oder Soll-Lage des fahrerlosen Transportfahrzeugs (1) zugeordnet sind, insbesondere in einen mit der Steuervorrichtung (5) gekoppelten Speicher (7) des fahrerlosen Transportfahrzeugs (1).

4. Fahrerloses Transportfahrzeug, aufweisend einen Fahrzeuggrundkörper (2), mehrere, drehbar relativ zum Fahrzeuggrundkörper (2) gelagerte Räder (3) zum Bewegen des fahrerlosen Transportfahrzeugs (1), wenigstens einen mit wenigstens einem der Räder (3) gekoppelten Antrieb (4) zum Antreiben des entsprechenden Rades (3), einen Speicher (7), in dem Signale oder Daten gespeichert sind, welche einer Soll-Position oder Soll-Lage des fahrerlosen Transportfahrzeugs (1) an einem Zielpunkt (33) zugeordnet sind, sowie wenigstens einen Sensor (6), der eingerichtet ist, die Umgebung am Zielpunkt (33) zu erfassen, um Signale oder Daten zu erhalten, welche der Soll-Position oder Soll-Lage des fahrerlosen Transportfahrzeugs (1) zugeordnet sind, und eine mit dem wenigstens einen Antrieb (4), dem Speicher (7) und dem wenigstens einen Sensor (6) gekoppelte Steuervorrichtung (5), **dadurch gekennzeichnet, dass** die Steuervorrichtung (5) eingerichtet ist, den wenigstens einen Antrieb (4) derart anzusteuern, dass das fahrerlose Transportfahrzeug (1) das Verfahren nach einem der Ansprüche 1 bis 3 durchführt.

5. Fahrerloses Transportfahrzeug nach Anspruch 4, dessen wenigstens ein Sensor (6) wenigstens einen Laserscanner und/oder wenigstens eine Kamera umfassen.

6. Fahrerloses Transportfahrzeug nach Anspruch 4 oder 5, dessen wenigstens eine Rad (3) ein omnidirektionales Rad ist, und/oder aufweisend wenigstens einen Roboterarm (21), der mehrere, hintereinander angeordnete, über Gelenken (23) verbundene Glieder (22) aufweist.

## Claims

1. Method for operating a driverless transport vehicle (1) comprising the following method steps:
a) automatically moving a driverless transport vehicle (1) from a starting point (31) to a destination (33) controlled in particular by a control device (5) of the driverless transport vehicle (1),
b) after automatically stopping the driverless transport vehicle (1) at the destination (33), automatically detecting the environment (35) at the destination (33) using at least one sensor (6) of the driverless transport vehicle (1), and
c) comparing signals or data assigned to the environment (35) and detected by the at least one sensor (6) with signals or data that are assigned to a target position or target orientation of the driverless transport vehicle (1) at the destination (33), in particular by means of the control device (5) of the driverless transport vehicle (1),
**characterised by**
d) automatically moving the driverless transport vehicle (1), controlled in particular by the control device (5), based on the comparison of the signals or data assigned to the environment (35) detected by the at least one sensor (6) with signals or data that are assigned to a target position or target orientation of the driverless transport vehicle (1), so that the actual position or actual orientation is the same as the target position or target orientation at least within a prespecified tolerance, by means of a position control or an orientation control, wherein the reference variable of the position control or the orientation control is assigned to the target position or the target orientation of the driverless transport vehicle (1) and the control variable of the position control or the orientation control is assigned to the actual position or the actual orientation of the driverless transport vehicle (1) at the destination (33), and automatically moving the driverless transport vehicle (1) from the starting point (31) to the destination by means of route planning on the basis of a digital map of the route (32) between the starting point (31) and the destination (33), which is saved in particular in a memory coupled to the control device of the driverless transport vehicle (1), additionally, prior to step a), comprising the following method steps:
- manually moving the driverless transport vehicle (1) from the starting point (31) to the destination (33),
- detecting the environment (34) by means of the at least one sensor (6) of the driverless transport vehicle (1) during the manual movement of the driverless transport vehicle (1), in order to obtain the digital map of the route (32) between the starting point (31) and the destination (33), and
- storing the digital map in a memory (7) coupled to the control device (5) of the driverless transport vehicle (1).

2. Method according to claim 1, additionally comprising repeating steps b) to d) until the actual position or actual orientation is the same as the target position or target orientation within the prespecified tolerance.

3. Method according to claim 1 or 2, additionally, prior to step (a), comprising the following method steps:
- manually moving the driverless transport vehicle (1) to the destination (33) and aligning the driverless transport vehicle (1) so that it adopts the target orientation,
- detecting the environment (35) at the destination (33) by means of at least the sensor (6) of the driverless transport vehicle (1) in order to obtain the signals or data which are assigned to the target position or target orientation of the driverless transport vehicle (1) at the destination (33), and
- storing the signals or data which are assigned to the target position or target orientation of the driverless transport vehicle (1), in particular in a memory (7) of the driverless transport vehicle (11) coupled to the control device (5).

4. Driverless transport vehicle, comprising a vehicle base body (2), a plurality of wheels (3) rotatably mounted relative to the vehicle base body (2) for moving the driverless transport vehicle (1), at least one drive (4) coupled to at least one of the wheels (3) for driving the corresponding wheel (3), a memory (7) in which signals or data are stored, which are assigned to a target position or target orientation of the driverless transport vehicle (1) at a destination (33), and at least one sensor (6) equipped to detect the environment at the destination (33) in order to obtain signals or data that are assigned to the target position or target orientation of the driverless transport vehicle (1), and a control device (5) coupled to the at least one drive (4), the memory (7) and the at least one sensor (6), **characterised in that** the control device (5) is set up to control the at least one drive (4) such that the driverless transport vehicle (1) implements the method according to any of claims 1 to 3.

5. Driverless transport vehicle according to claim 4, wherein the at least one sensor (6) comprises at least one laser scanner and/or at least one camera.

6. Driverless transport vehicle according to claim 4 or 5, wherein the at least one wheel (3) is an omnidirectional wheel, and/or comprising at least one robot arm (21) which comprises a plurality of limbs (22) arranged one behind the other and connected by joints (23).

## Revendications

1. Procédé de fonctionnement d'un véhicule de transport (1) sans conducteur, présentant les étapes de procédé suivantes:
a) déplacement automatique d'un véhicule de transport (1) sans conducteur depuis un point de départ (31) jusqu'à un point d'arrivée (33), en particulier commandé au moyen d'un dispositif de commande (5) du véhicule de transport (1) sans conducteur,
b) après un arrêt automatique du véhicule de transport (1) sans conducteur au point d'arrivée (33), détection automatique de l'environnement (35) au point d'arrivée (33) avec au moins un capteur (6) du véhicule de transport (1) sans conducteur, et
c) en particulier au moyen du dispositif de commande (5) du véhicule de transport (1) sans conducteur, comparaison des signaux ou données associé(e)s à l'environnement (35) détecté au moyen dudit au moins un capteur (6) avec des signaux ou données qui sont associés à une position de consigne ou à une situation de consigne du véhicule de transport (1) sans conducteur,
**caractérisé par**
d) le mouvement automatique du véhicule de transport (1) sans conducteur, en particulier commandé par le dispositif de commande (5), sur la base de la comparaison des signaux ou données associé(e)s à l'environnement (35) détecté au moyen dudit au moins un capteur (6) avec des signaux ou données qui sont associé(e)s à une position de consigne ou à une situation de consigne du véhicule de transport (1) sans conducteur, de telle sorte que la position réelle ou la situation réelle est égale à la position de consigne ou la situation de consigne au moins dans une marge de tolérance prédéterminée, au moyen d'un réglage de position ou d'un réglage de situation, la grandeur de référence du réglage de position ou du réglage de situation étant associée à la position de consigne ou à la situation de consigne du véhicule de transport (1) sans conducteur et la grandeur de référence du réglage de position ou du réglage de situation étant associée à la position réelle ou à la situation réelle du véhicule de transport (1) sans conducteur au point d'arrivée, et déplacement automatique du véhicule de transport (1) sans conducteur depuis le point de départ (31) jusqu'au point d'arrivée au moyen d'une planification de parcours sur la base d'une carte géographique numérique du trajet (32) entre le point de départ (31) et le point d'arrivée (33), qui est stockée en particulier dans une mémoire accouplée au dispositif de commande du véhicule de transport (1) sans conducteur, présentant en outre, avant l'étape a), les étapes de procédé suivantes :
- déplacement manuel du véhicule de transport (1) sans conducteur depuis le point de départ (31) jusqu'au point d'arrivée (33),
- pendant le déplacement manuel du véhicule de transport (1) sans conducteur, détection de l'environnement (34) au moyen dudit au moins un capteur (6) du véhicule de transport (1) sans conducteur pour obtenir la carte géographique numérique du trajet (32) entre le point de départ (31) et le point d'arrivée (33), et
- stockage de la carte géographique numérique dans une mémoire (7) accouplée au dispositif de commande (5) du véhicule de transport (1) sans conducteur.

2. Procédé selon la revendication 1, présentant en outre la répétition des étapes b) à d) jusqu'à ce que la position réelle ou la situation réelle soit égale à la position de consigne ou la situation de consigne, respectivement, dans la marge de tolérance prédéterminée.

3. Procédé selon la revendication 1 ou 2, présentant en outre, avant l'étape a), les étapes de procédé suivantes:
- déplacement manuel du véhicule de transport (1) sans conducteur au point d'arrivée (33) et orientation du véhicule de transport (1) sans conducteur de telle sorte qu'il occupe la situation de consigne,
- détection de l'environnement (35) au point d'arrivée avec au moins le capteur (6) du véhicule de transport (1) sans conducteur pour obtenir les signaux ou données qui sont associé(e)s à la position de consigne ou à la situation de consigne du véhicule de transport (1) sans conducteur au point d'arrivée (33), et
- stockage des signaux ou données qui sont associé(e)s au véhicule de transport (1) sans conducteur, en particulier dans une mémoire (7) du véhicule de transport (1) sans conducteur accouplée au dispositif de commande (5).

4. Véhicule de transport (1) sans conducteur, présentant un corps de base de véhicule (2), plusieurs roues (3) montées rotatives par rapport au corps de base de véhicule (2) pour déplacer ledit véhicule de transport (1) sans conducteur, au moins un entraînement (4) accouplée à au moins l'une des roues pour entraîner la roue (3) correspondante, une mémoire (7) dans laquelle sont stocké(e)s des signaux ou données qui sont associé(e)s à une position de consigne ou à une situation de consigne du véhicule de transport (1) sans conducteur à un point d'arrivée (33), ainsi qu'au moins un capteur (6) qui est conçu pour détecter l'environnement au point d'arrivée (33) pour obtenir des signaux ou données qui sont associé(e)s à la position de consigne ou à la situation de consigne du véhicule de transport (1) sans conducteur, et un dispositif de commande (5) accouplée audit au moins un entraînement (4), à la mémoire (7) et audit au moins un capteur (6), **caractérisé en ce que** le dispositif de commande (5) est conçu pour piloter ledit au moins un entraînement (4) de telle sorte que le véhicule de transport (1) sans conducteur met en œuvre le procédé selon l'une des revendications 1 à 3.

5. Véhicule de transport (1) sans conducteur selon la revendication 4, dont ledit au moins un capteur (6) comprend au moins un scanner au laser et/ou au moins une caméra.

6. Véhicule de transport (1) sans conducteur selon la revendication 4 ou 5, dont ladite au moins une roue (3) est une roue omnidirectionnelle et/ou présentant au moins un bras de robot (21) qui présente plusieurs membres (22) agencés les uns derrière les autres et reliés par des articulations (23).
